# EUROPEAN PATENT SPECIFICATION

(11) **EP 0 687 581 B1**
(45) Date of publication and mention of the grant of the patent: **01.09.1999**
(21) Application number: 95304143.1
(22) Date of filing: 15.06.1995
(51) Int. Cl.: B60C 9/26, B60C 9/22

(54) **Pneumatic radial tyre**
Radialer Luftreifen
Bandage pneumatique radial

(30) Priority: 17.06.1994 GB 9412198
(43) Date of publication of application: 20.12.1995
(73) Proprietor: Sumitomo Rubber Industries Ltd., Kobe-shi, Hyogo 651 (JP)
(72) Inventor: McPhee, Lenin, Sutton Coldfield, West Midlands (GB); Corner, Michael Raymond, Coundon, Coventry CV5 8HT (GB); Cockbill, Christopher Mark, Tamworth, Staffordshire B77 4BZ (GB)
(74) Representative: Stewart, Charles Geoffrey

(56) References cited:
- EP-A- 0 297 889
- EP-A- 0 412 776
- EP-A- 0 474 314
- EP-A- 0 565 981
- FR-A- 2 379 391
- FR-A- 2 440 838
- GB-A- 2 253 818

## Description

The present invention relates to a pneumatic radial tyre and in particular but not exclusively to heavy duty tyres for such vehicles as trucks and buses.

Such heavy duty tyres have wide relatively flat ground contacting tread regions reinforced by a breaker assembly which is dedicated to maintaining a consistent contact between the tyre and road surface under all conditions. Such reinforcing breaker assemblies normally comprise a plurality of breaker plies of fabric each consisting of rubber coated metallic cords laid parallel to each other and inclined with respect to the circumferential direction of the tyre.

Mounting the tyre on a wheelrim and inflating to its scheduled pressure produces a change in dimension of the tyre which is manifest in the tread region as a growth in the radial direction. However such radial growth is typically non-uniform with the lateral regions of the tread growing more than the central region. Thus there is a tendency to increase stress concentrations at the lateral edges of the breaker assembly which can give rise to rapid and uneven wear at the tread edges and contribute to breakdown of the bond between the steel cord and the rubber coating known as 'breaker edge looseness'.

Furthermore in use, particularly at high speed, the tyre tread is subjected to significant centrifugal forces which accordingly act on the breaker assembly to further increase the stress concentration at the breaker edge and promote the development of breaker edge looseness.

A tyre having belt edge reinforcing members in accordance with the preamble of claim 1 is known, for example, from FR-A-2440838.

It is an object of the present invention to overcome or at least mitigate the effects of the above problems.

According to the present invention a pneumatic tyre comprises a tyre carcass reinforced by a carcass ply passing through a ground contacting tread, the tread being reinforced by a breaker assembly comprising at least two adjacent breaker plies of parallel cords inclined with respect to the circumferential direction of the tyre and an overlay strip in each edge region of the breaker assembly wherein the radially inner breaker ply is wider than the radially outer breaker ply, the overlay strip overlies the edge of the radially outer breaker ply and the axially inner edge of the overlay strip is positioned axially inward of the edge of the radially outer breaker ply and the axially inner edge of the overlay strip is positioned between 2% and 10% of the width of the radially outer breaker ply from the outer breaker ply edge.

The axially outer edge of the overlay strip may be positioned between 30% to 70% of the distance between the adjacent edges of the inner and outer breaker plies from the edge of the inner breaker ply.

The pneumatic tyre may additionally comprise a slave breaker radially outside and adjacent to the radially outer breaker ply and lying between the respective axially inner edges of the overlay strips.

Preferably the overlay strips comprise rubber covered reinforcing cords laid at between 0° and 5° to the circumferential direction of the tyre. The overlay strips may be formed by one or more full width turns of tyre fabric or be formed by spirally winding a narrower tape of tyre fabric. Preferably the overlay strips comprise organic fibre cords and most preferably comprise nylon cords.

Further aspects of the present invention will become apparent from the following description, by way of example only, of one embodiment of the invention in which:-
Figure 1 is a schematic diagram of a cross-section of one half of a tyre of the invention; and
Figure 2 is a schematic diagram showing enlarged detail of the shoulder region of the tyre of Figure 1.

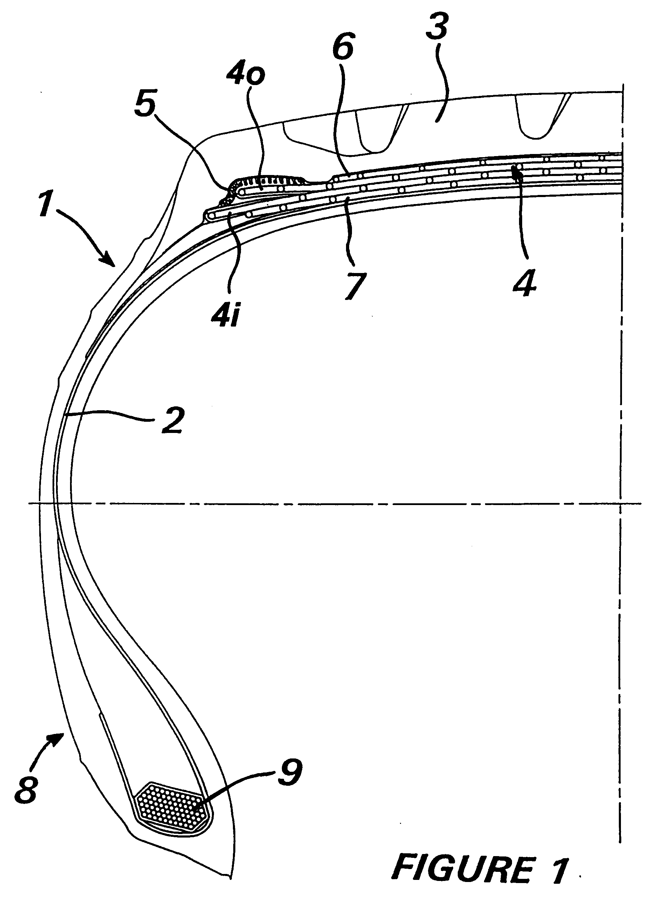

Figure 1 shows a heavy duty tyre 1 for a truck or bus having a reinforcing carcass ply 2 extending between bead regions 8 through a ground contacting tread region 3. In each bead region 8 the carcass ply 2 is turned around a circumferentially extending bead core 9 from the axial inside to the outside to form carcass ply turn-ups.

Disposed radially outward and adjacent to the carcass ply 2 in the tread region 3 is a reinforcing breaker assembly 4 comprising four breaker plies of metallic cords embedded in rubber and inclined with respect to the circumferential direction of the tyre. The radially innermost breaker ply 7 comprises parallel cords laid at a relatively high angle of between 50°-70° whilst the remaining breaker plies comprise parallel cords laid at angles between 15°-30°. Radially outward of and adjacent to the innermost breaker ply 7 is the widest breaker ply 4i. Radially outward of and adjacent to the widest breaker ply 4i is breaker ply 4o having a width narrower than breaker ply 4i but wider than the innermost breaker ply 7. The radially outermost slave breaker ply 6 has the narrowest width.

In each edge region of the breaker assembly is disposed an overlay strip 5 overlying the edges of breaker ply 4o such that the axially inner edge of the overlay strip 5 is axially inward of the edge of breaker ply 4o and the axially outer edge of the overlay strip 5 is inward of the edge of the inner breaker ply 4i and outward of the edge of the outer breaker ply 4o.

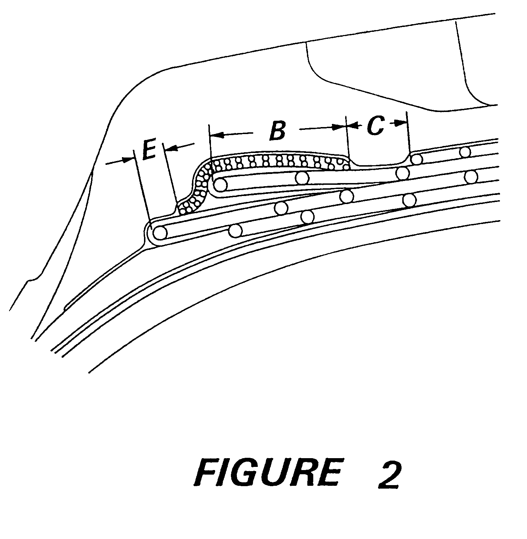

As shown in Figure 2, the overlay strip 5 overlies the edge of the outer breaker 4o by a distance B. The distance B is between 2 and 10% of the overall width of the breaker ply 4o. If the distance B is less than 2% of the overall width of the breaker ply 4o then there has been found insufficient overlap by the overlay strip 5 to prevent movement of the breaker ply. If the distance B is greater than 10% then it has been found that the extra overlay is unnecessary and does not further increase the effectiveness of the invention. In this embodiment the distance B is equal to 8% of the overall width of the breaker ply 4o. The axially inner edge of the overlay strip 5 is also positioned axially outward of the outward edge of the radially outermost slave breaker 6 by a distance C, equal in this embodiment to 10mm.

The axially outer edge of the overlay strip 5 is positioned axially inward of the outer edge of the inner breaker ply 4i by a distance E. The distance E may be between 30% and 70% of the distance between the adjacent edges of the inner and outer breaker plies 4i and 4o respectively. In this embodiment E is equal to 50% of the distance between these edges.

The overlay strip 5 comprises two full turns of cord reinforce tyre fabric 32mm wide. The cords lie in the longitudinal direction of the tyre fabric and thus are disposed at substantially 0° to the tyre circumferential direction. The cords are nylon cords of 2/140 TEX. The overlay strip 5 may alternatively be formed from a narrow tape of one or more cords embedded in rubber which are wound spirally around the circumference of the breaker edge from the axial inside to the outside or vice versa as is well known in the art.

## Claims

1. A pneumatic tyre (1) comprising a tyre carcass reinforced by a carcass ply (2) passing through a ground contacting tread (3), the tread (3) being reinforced by a breaker assembly (4) comprising at least two adjacent breaker plies (4i,4o) of parallel cords inclined with respect to the circumferential direction of the tyre and an overlay strip (5) in each edge region of the breaker assembly (4) wherein the radially inner breaker ply (4i) is wider than the radially outer breaker ply (4o), the overlay strip (5) overlies the edge of the radially outer breaker ply (4o) and the axially inner edge of the overlay strip (5) is positioned axially inward of the edge of the radially outer breaker ply (4o), characterised in that the axially inner edge of the overlay strip (5) is positioned between 2% and 10% of the width of the radially outer breaker (4o) from the outer breaker ply edge.

2. A pneumatic tyre according to claim 1, characterised in that the axially outer edge of the overlay strip (5) is positioned between 30% and 70% of the distance between the adjacent edges of the inner and outer breaker plies axially inward of the edge of the inner breaker ply.

3. A pneumatic tyre according to either of claims 1 or 2, characterised in that the breaker assembly comprises a slave breaker ply (6) radially outside and adjacent to the radially outer breaker ply (4o) having edges lying between and spaced apart from the respective adjacent axially inner edges of the overlay strips (5).

4. A pneumatic tyre according to claim 3, characterised in that the edges of the further breaker (6) are spaced apart from the respective adjacent inner edges of the overlay strips by a distance (B) of 10mm or more.

5. A pneumatic tyre according to any of claims 1 to 4, characterised in that the overlay strips (5) comprise rubber coated cords inclined at an angle of between 0° to 5° to the circumferential direction of the tyre.

6. A pneumatic tyre according to claim 5, characterised in that the overlay strips (5) comprise tapes of one or more cords spirally wrapped in the axial direction.

7. A pneumatic tyre according to claim 5 or 6, characterised in that the overlay strips (5) comprise organic fibre cords.

8. A pneumatic tyre according to claim 7, characterised in that the overlay strips (5) comprise nylon cords.

## Patentansprüche

1. Luftreifen (1) mit einer Reifenkarkasse, die durch eine Karkaßlage (2) verstärkt ist, die durch einen den Boden berührenden Laufstreifen (3) verläuft, wobei der Laufstreifen (3) durch eine Gürtelanordnung (4) verstärkt ist, die mindestens zwei benachbarte Gürtellagen (4i, 4o) aus parallelen Corden, die in bezug auf die Umfangsrichtung des Reifens schräggestellt sind, und einen Auflagestreifen (5) in jedem Kantenbereich der Gürtelanordnung (4) umfaßt, wobei die radial innere Gürtellage (4i) breiter als die radial äußere Gürtellage (4o) ist, wobei der Auflagestreifen (5) über der Kante der radial äußeren Gürtellage (4o) liegt und die axial innere Kante des Auflagestreifens (5) axial innen in bezug auf die Kante der radial äußeren Gürtellage (4o) angeordnet ist, dadurch gekennzeichnet, daß die axial innere Kante des Auflagestreifens (5) in einem Abstand zwischen 2% und 10% der Breite des radial äußeren Gürtels (4o) von der äußeren Gürtellagenkante aus angeordnet ist.

2. Luftreifen nach Anspruch 1,
dadurch gekennzeichnet, daß die axial äußere Kante des Auflagestreifens (5) in einem Abstand zwischen 30% und 70% der Strecke zwischen den benachbarten Kanten der inneren und äußeren Gürtellagen axial innen in bezug auf die Kante der inneren Gürtellage angeordnet ist.

3. Luftreifen nach Anspruch 1 oder 2,
dadurch gekennzeichnet, daß die Gürtelanordnung eine Nebengürtellage (6) radial außen und benachbart zur radial äußeren Gürtellage (4o) umfaßt, deren Kanten zwischen und beabstandet zu den jeweiligen, benachbarten, axial inneren Kanten der Auflagestreifen (5) liegen.

4. Luftreifen nach Anspruch 3,
dadurch gekennzeichnet, daß die Kanten des weiteren Gürtels (6) von den jeweiligen, benachbarten inneren Kanten der Auflagestreifen eine Strecke (B) von 10 mm oder mehr beabstandet sind.

5. Luftreifen nach einem der Ansprüche 1 bis 4,
dadurch gekennzeichnet, daß die Auflagestreifen (5) mit Kautschuk beschichtete Corde umfassen, die unter einem Winkel zwischen 0° und 5° zur Umfangsrichtung des Reifens schräggestellt sind.

6. Luftreifen nach Anspruch 5,
dadurch gekennzeichnet, daß die Auflagestreifen (5) Bänder aus einem oder mehreren Corden umfassen, die in der Axialrichtung spiralförmig gewickelt sind.

7. Luftreifen nach Anspruch 5 oder 6,
dadurch gekennzeichnet, daß die Auflagestreifen (5) organische Fasercorde umfassen.

8. Luftreifen nach Anspruch 7,
dadurch gekennzeichnet, daß die Auflagestreifen (5) Nyloncorde umfassen.

## Revendications

1. Pneumatique (1) comprenant une carcasse armée par une nappe (2) de carcasse passant dans une bande de roulement (3) qui est au contact du sol, la bande de roulement (3) étant armée par un ensemble à nappe sommet (4) qui comprend au moins deux nappes adjacentes (4i, 4o) de nappe sommet formées de câblés parallèles inclinés par rapport à la direction circonférentielle du pneumatique, et une bande de recouvrement (5) placée dans chaque région de bord de l'ensemble à nappe sommet (4), la nappe radialement interne (4i) de la nappe sommet étant plus large que la nappe radialement externe (4o) de la nappe sommet, la bande de recouvrement (5) recouvrant le bord de la nappe radialement externe (4o) de la nappe sommet, et le bord axialement interne de la bande de recouvrement (5) étant placé axialement vers l'intérieur du bord de la nappe radialement externe (4o) de la nappe sommet, caractérisé en ce que le bord axialement interne de la bande de recouvrement (5) est disposé à une distance comprise entre 2 et 10 % de la largeur de la nappe radialement externe (4o) de nappe sommet depuis le bord de la nappe externe de la nappe sommet.

2. Pneumatique selon la revendication 1, caractérisé en ce que le bord axialement externe de la bande de recouvrement (5) est positionné à une distance comprise entre 30 et 70 % de la distance comprise entre les bords adjacents des nappes interne et externe de nappe sommet axialement vers l'intérieur du bord de la nappe interne de nappe sommet.

3. Pneumatique selon l'une des revendications 1 et 2, caractérisé en ce que l'ensemble a nappe sommet comprend une nappe auxiliaire (6) de nappe sommet placée radialement à l'extérieur de la nappe radialement externe (4o) de nappe sommet, adjacente à celle-ci et ayant des bords qui sont compris entre les bords axialement internes adjacents respectifs des bandes de recouvrement (5) et à distance de ces bords.

4. Pneumatique selon la revendication 3, caractérisé en ce que les bords de la nappe sommet supplémentaire (6) sont placés à une distance (B) des bords internes adjacents respectifs des bandes de recouvrement supérieure ou égale à 10 mm.

5. Pneumatique selon l'une quelconque des revendications 1 à 4, caractérisé en ce que les bandes de recouvrement (5) comprennent des câblés revêtus de caoutchouc et inclinés d'un angle compris entre 0 et 5° par rapport à la direction circonférentielle du pneumatique.

6. Pneumatique selon la revendication 5, caractérisé en ce que les bandes de recouvrement (5) comprennent des rubans formés d'un ou plusieurs câblés enroulés en spirale dans la direction axiale.

7. Pneumatique selon la revendication 5 ou 6, caractérisé en ce que les bandes de recouvrement (5) comprennent des câblés de fibres organiques.

8. Pneumatique selon la revendication 7, caractérisé en ce que les bandes de recouvrement (5) comprennent des câblés de "Nylon".
